# EUROPEAN PATENT APPLICATION

(11) **EP 1 783 411 A1**
(43) Date of publication of application: **09.05.2007**
(21) Application number: 05717196.9
(22) Date of filing: 04.03.2005
(51) Int. Cl.: F16K 31/34, E03D 1/34

(54) **AUTOMATIC FLUSH REGULATOR FOR TOILETS AND SIMILAR**

(30) Priority: 10.03.2004 ES 200400591 U
(71) Applicant: Ferréfont, Albert, C/Consell de Cent 130-136, Esc. Esq. 6D 08015 Barcelona (ES); Ferré Cirera, Daniel, C/Pau Casals 2, 18° 1° 08340 Vilassar de Mar (ES)
(72) Inventor: FERR FONT, Albert, E-08015 Barcelona (ES); FERR CIRERA, Daniel, E-08340 Vilassar de Mar (Barcelona) (ES); POBLET FORTUNY, Maxim (Fallecido), deceased (ES)
(74) Representative: Carpintero Lopez, Francisco
(86) International application number: PCT/ES2005/000112
(87) International publication number: WO 2005/088179

(57) **Abstract**

The invention relates to an automatic flush regulator for toilets and similar, comprising a sealed regulator tank (1) which is housed in an outer casing (2) that is closed with a lid (5) and a protective cylindrical panel (4) at the front. The base (3) of the tank comprises: an inlet (6) with a valve (8) which is equipped with a Venturi-type device; and a discharge outlet (7) for the liquid collected in the tank, said outlet comprising a membrane valve (9) which is actuated with a lever (10) which, in turn, actuates the circuit-closing key (19). The aforementioned inlet valve (8) is essentially **characterised in that** it comprises a side inlet (22) which is connected to the air intake tube (23) which is suitably fixed to the inner face of the outer casing. Moreover, a conduit extends from the above-mentioned membrane valve to the toilet, and the conduit (13) delivers water to the tank through the inlet valve.

## Description

The present utility model relates to an automatic flush regulator specifically designed for use in toilets and similar apparatus, the object of which is to allow the regulated discharge by the user of the liquid, generally water, used to clean said toilet or the like after it is used.

The essential characteristics of this device are described below.

The aforementioned device comprises a discharge regulation valve that can be actuated at will by the user, and a previously-dosed discharge liquid stored in a tank provided in the device for such purpose. This is achieved by the action of an air mass contained in said tank that is compressed by the liquid introduced in the tank.

In the filling stage, during which the water enters the sealed tank through the supply duct, the air contained in said tank is compressed to a predetermined limit and an also predetermined amount of liquid is stored in the tank allowing a correct and sufficient cleaning of the toilet.

The device object of the present utility model has as its essential characteristic a membrane-type discharge valve actuated by depression, lacking any electrical components, which when actuated triggers the discharge of the tank and is closed immediately after the discharge and allowing to refill the tank leaving it ready for another operation. When the device is operated by actuating the membrane valve, the pressure of the compressed air in the top part of the tank makes the water exit the tank with considerable force and speed through the discharge outlet.

Currently existing devices of this type have the disadvantage that after a certain number of discharges the amount of air inside the tank has decreased, as at the time of discharge it is impossible to prevent the undesired loss with the water of a small amount of air, thereby gradually reducing the efficiency of the of the system until it is rendered useless when the amount of air left in the tank is too small to cause a suitable and useful discharge when compressed by the water entering the tank.

The device object of the present utility model solves the aforementioned drawbacks and eliminates them by adding to the mechanism assembly an element that guarantees the replacement with each discharge of the small amount of air that is lost, so that the correct operation of the aforementioned device will be complete and independent of the number of discharges that may be effected throughout its operational lifetime.

The element that guarantees the replacement of the air consists of an air inlet consisting of a specially designed valve which takes advantage of the Venturi effect each time water is introduced in the sealed regulator tank, adding together with said pre-determined amount of water a certain amount of air allowing to ensure the replacement of the air that may have been lost with the flushed water. In this way the amount of air inside the tank is kept constant and the correct operation of the device is ensured, providing a correct discharge with the desired force needed to clean the toilet or the like.

Finally, it should be remarked that toilet flush devices, as they are installed in humid environments, must fulfil strict regulations for protection against electrical accidents, so that the device object of the present utility model, provided with the aforementioned membrane valve for discharge, with no electrical components for actuation, eliminates said risk and provides a safe assembly with a reliable operation.

To describe in the greatest possible detail the characteristics of the device object of the present utility model, a set of drawings is accompanied representing, by way of illustration and in a non-limiting sense, several embodiments of the automatic flush regulator and its applications.

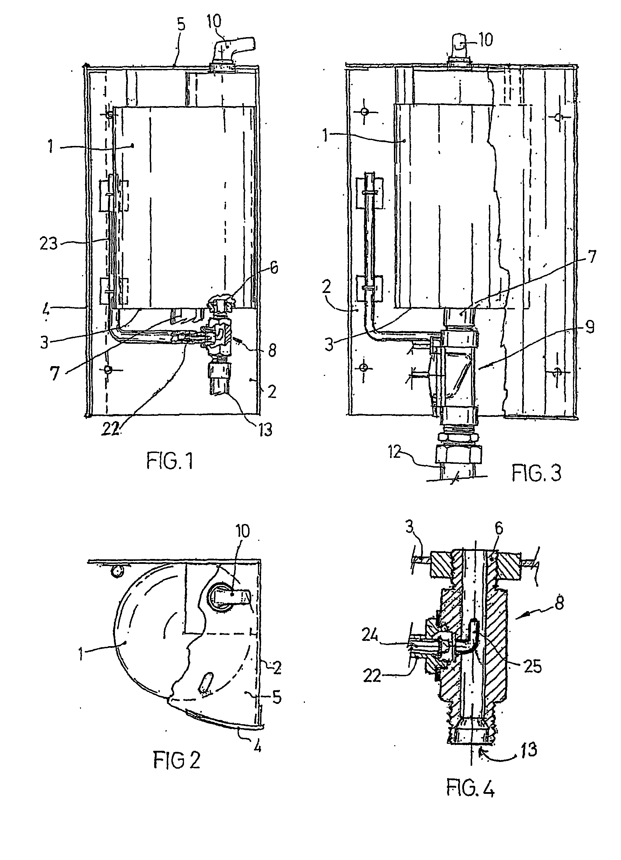

In said drawings, Figure 1 is a side elevation view, in partial section, of the device assembly already installed in an apparatus intended for flushing toilets and the like;
Figure 2 is a plan view corresponding to the previous figure, also in partial section and placed at an angle of the toilet;
Figure 3 is a front view of the same assembly, according to Figure 1;

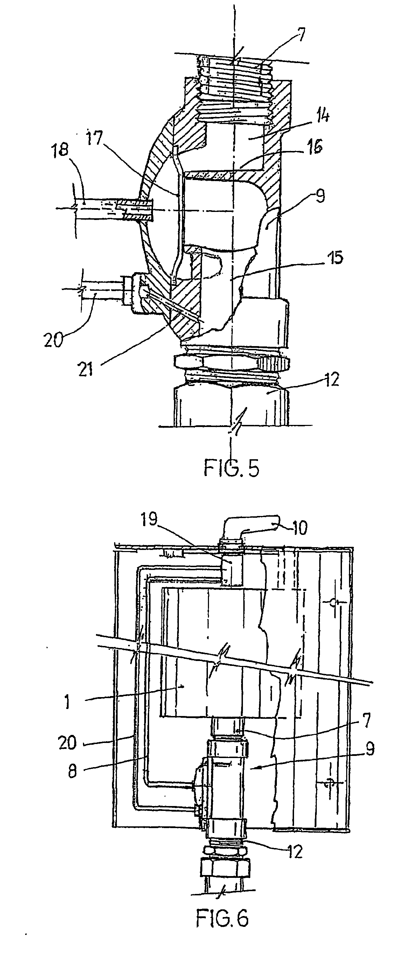

Figure 4 is a detail in enlarged and section view of the valve provided with the Venturi system for replenishing air losses;
Figure 5 is another enlarged and section view of the membrane valve;
Figure 6, finally, is a schematic representation of the installation of said membrane valve.

According to the drawings, the automatic flush device for cleaning toilets and the like comprises a tank, preferably cylindrical (1) in shape and fully sealed, attached to the walls of the device casing (2) which, in the example represented in figures 1 to 3, has an upright back to allow its fast and simple installation on a wall corner occupying a minimal space.

The body (1) is closed on the front by the screen with a cylindrical structure (4), suitably attached to the body (2), the top part of said body being closed by the lid (5).

The base (3) of the tank (1) contains both the inlet (6) and the discharge outlet (7) for the liquid collected in said tank (1).

At the inlet (6) is placed a valve (8) with the aforementioned Venturi device, while at the discharge outlet (7) is a membrane valve (9) that will be actuated by the user with a lever (10) placed on the upper lid (5) of the device, which actuates the circuit-closing valve (19).

From the membrane valve (9) the conduit (12) continues towards the toilet, while the conduit (13) will supply the water to the tank (1) through the inlet valve (8).

The membrane valve (9) is formed by a body with an upper inlet (14) for water arriving from the tank (1) and a lower outlet (15) connected to the conduit (12).

The central part of the body (9) is divided by a circular wall (16) on which the membrane (17) rests, sealing the direct passage of the liquid from the tank (1) to the release conduit (12).

This seal is achieved by the pressure exerted on the membrane (17) by the liquid itself which, after entering through the upper inlet (14), fills the anterior part of the valve, oppressing the membrane strongly against its seat, formed against the circular separation wall (16).

From the central front part of the membrane valve body (9) begins the conduit (18), the primary conduit of the valve actuation circuit, which reaches the circuit-closing valve (19) next to the lever (10).

Beyond said circuit closing valve (19) the circuit is completed with the return conduit (20), which runs down to the lower part of the anterior face of the valve body (9), communicating directly to the valve release area through the small orifice (21).

When the lever (10) is actuated, the circuit closing valve (19) is opened, causing liquid to pass through the primary circuit (18) into the secondary conduit (20). This liquid is part of that which fills the front part of the valve body (9), so that no pressure will be exerted against the membrane (17) and the membrane will move away from its seat, allowing liquid to pass directly and freely from the discharge outlet (7) to the conduit (12), which releases into the toilet.

To summarise the previous paragraph, actuating the lever (10) will make the circuit closing valve (19) open the valve actuation circuit, passing liquid from the front part of the valve (9) in the primary conduit (18) through the return conduit (20) and the final orifice (21) to the release conduit, at which time the valve membrane (17) will no longer be pressed against its seat and will open the way for the liquid to pass from the tank (1) to the release conduit (12).

The essential feature of the inlet valve (8) is a lateral inlet (22) to which the air intake tube (23) is connected, suitably attached to the inner face of the body (2). Inside the lateral inlet (22) of the inlet valve (8) is the piston (24) that regulates passage to the Venturi nozzle (25) placed inside the conduit of said valve (8) and bent in the direction of water inflow, disposed such that the water flow causes a corresponding air flow, the air being obtained from the outside through the aforementioned intake tube (23), which consequently enters the tank (1).

Having sufficiently described the object of the present utility model, it should be remarked that any variations in the size, shape, finish and external appearance or in the materials used to execute the embodiment of the invention described in no way affect its essence, as summarised in the following claims

## Claims

1. Automatic flush regulator for toilets and the like, consisting of a sealed tank in which is introduced through a suitable valve the amount of liquid that will compress the air contained inside the tank, so that when the discharge valve is opened using an accessible external lever, the expansion of said compressed air will expel the liquid contained in the sealed tank with a certain force, thereby properly cleaning the toilet or the like, essentially **characterised by** comprising a membrane valve (9) actuated by depression and lacking any electrical components, placed in the discharge outlet (7) of the tank (1), regulating the liquid discharge through the lower assembly to the toilet, the valve (9) being actuated by the user when desiring to flush using a lever (10), which will open the closing valve (19) of the valve actuation circuit and stop the pressure exerted on said closing membrane (17), which will separate from its seat allowing the liquid to pass freely from the tank to the toilet, impelled by the pressurised air compressed inside the tank.

2. Automatic flush regulator for toilets and the like, according to the previous claim, essentially **characterised in that** the actuation circuit of the membrane valve (9), which in turn comprises a body with an upper inlet (14) for liquid arriving from the tank (1) and a lower outlet (15) connected to the release conduit (12), is formed by the primary conduit (18) which begins at the front central part of the membrane valve body (9), is divided by the circular wall (16) on which the membrane (17) rests, reaches the circuit closing valve (19) and continues with the return circuit (20) and a final connection orifice (21), which outlets in the front lower part of the aforementioned valve body, above a conduit (15) directly connecting to the release conduit (12), so that when the corresponding lever (10) is operated the circuit closing valve (19) will open, causing a depression of the front part of the valve body when the circuit liquid passes to the drain, so that the membrane (17) will separate from its seat and allow the liquid to pass when discharged.

3. Automatic flush regulator for toilets and the like, according to claim 2, essentially **characterised in that** it has an external air intake (23) consisting of a side inlet (22) on the side of the inlet valve (8) that controls the entry of water to the sealed regulator tank (1) through the conduit (13), to which is connected the air inlet tube, said side inlet being internally provided with a regulator piston (24) and a Venturi-type nozzle (25), the upward-facing elbow end of which is placed inside the water inlet conduit to the regulator tank, all of this such that when water flows inside said conduit to fill said tank, the Venturi effect results in an air flow which, when carried jointly into the tank, will compensate unavoidable air loss produced in each discharge, guaranteeing the stability of the air content of the tank and its impelling action when the discharge takes place.

4. Automatic flush regulator for toilets and the like, according to claim 1, essentially **characterised in that** the sealed regulator tank (1) is placed inside an enclosing outer casing (2) closed by a lid (5), the front of which consists of a protective cylindrical plate (4) attached to the back of the body, which in its various applications will have a back in a straight angle for installation on a wall corner or a fully flat back for installation against a flat wall, while on the base (3) of the tank (1) are located both the intake (6) and outlet (7) for the liquid contained in said tank (1).

## Amended claims

### Amended claims under Art. 19.1 PCT

**2.** Automatic flush regulator for toilets and the like, consisting of a sealed tank in which is introduced through a suitable valve the amount of liquid that will cause the compression of the air contained therein, so that when the discharge valve is opened with an accessible external lever, the expansion of this compressed air will cause the discharge with a certain force of the liquid contained in the sealed tank, thereby allowing a suitable cleaning of the toilet or the like, this regulator comprising a membrane valve (9) actuated by depression and lacking any electrical components, operated by a lever (10), essentially **characterised in that** the actuation circuit of the membrane valve (9), which in turn comprises a body with an upper inlet (14) for liquid arriving from the tank (1) and a lower outlet (15) connected to the release conduit (12), is formed by the primary conduit (18) which begins at the front central part of the membrane valve body (9), is divided by the circular wall (16) on which the membrane (17) rests, reaches the circuit closing valve (19) and continues with the return circuit (20) and a final connection orifice (21), which outlets in the front lower part of the aforementioned valve body, above a conduit (15) directly connecting to the release conduit (12), so that when the corresponding lever (10) is operated the circuit closing valve (19) will open, causing a depression of the front part of the valve body when the circuit liquid passes to the drain, so that the membrane (17) will separate from its seat and allow the liquid to pass when discharged.

**3.** Automatic flush regulator for toilets and the like, according to claim 2, essentially **characterised in that** it has an external air intake (23) consisting of a side inlet (22) on the side of the inlet valve (8) that controls the entry of water to the sealed regulator tank (1) through the conduit (13), to which is connected the air inlet tube (10), said side inlet being internally provided with a regulator piston (24) and a Venturi-type nozzle (25), the upward-facing elbow at the end of which is placed inside the water inlet conduit to the regulator tank, all of this such that when water flows inside said conduit to fill said tank, the Venturi effect results in an air flow which, when carried jointly into the tank, will compensate unavoidable air loss produced in each discharge, guaranteeing the stability of the air content of the tank and its impelling action when the discharge takes place.

**4.** Automatic flush regulator for toilets and the like, according to claim 1, essentially **characterised in that** the sealed regulator tank (1) is placed inside an enclosing outer casing (2) closed by a lid (5), the front of which consists of a protective cylindrical plate (4) attached to the back of the body, which in its various applications will have a back in a straight angle for installation on a wall corner or a fully flat back for installation against a flat wall, while on the base (3) of the tank (1) are located both the intake (6) and outlet (7) for the liquid contained in said tank (1).
